# EUROPEAN PATENT SPECIFICATION

(11) **EP 2 333 983 B1**
(45) Date of publication and mention of the grant of the patent: **13.02.2013**
(21) Application number: 09306207.3
(22) Date of filing: 10.12.2009
(51) Int. Cl.: H04B 7/06, H04B 7/04

(54) **A method for downlink communication to user terminals on the same radio resources, a base station and a user terminal therefor**
Verfahren zur Downlink-Kommunikation mithilfe eines Downlink-überlagerten Funksignals, Basisstation und Teilnehmerendgerät dafür
Procédé pour la communication en liaison descendante au moyen d'un signal radio superposé en liaison descendante, station de base et terminal utilisateur correspondant

(43) Date of publication of application: 15.06.2011
(73) Proprietor: Alcatel Lucent, 75007 Paris (FR)
(72) Inventor: Kaminski, Stephen, 73054, Eislingen (DE); Cezar, Bozo, 70439, Stuttgart (DE)
(74) Representative: Kleinbub, Oliver

(56) References cited:
- WO-A2-2008/103313
- PUTTEGOWDA K ET AL: "On the effect of cancellation order in successive interference cancellation for CDMA systems" VEHICULAR TECHNOLOGY CONFERENCE, 2003. VTC 2003-FALL. 2003 IEEE 58TH ORLANDO, FL, USA 6-9 OCT. 2003; [IEEE VEHICULAR TECHNOLGY CONFERENCE], PISCATAWAY, NJ, USA,IEEE, US LNKD- DOI:10.1109/VETECF.2003.1285178, 6 October 2003 (2003-10-06), pages 1035-1039VOL.2, XP010700939 ISBN: 978-0-7803-7954-1
- QUALCOMM EUROPE: "Control Channel Issues for DL MIMO" 3GPP DRAFT; R1-060455, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Denver, USA; 20060209, 9 February 2006 (2006-02-09), XP050101395 [retrieved on 2006-02-09]
- ALCATEL-LUCENT: "Single-cell MU-MIMO for LTE-A" 3GPP DRAFT; R1-093773 MU_MIMO, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050388293 [retrieved on 2009-10-06]

## Description

### Field of the invention

The invention relates to a method for downlink communication between a base station and a user terminal by means of a downlink superimposed radio signal comprising downlink data for the user terminal and for at least one further user terminal that are transmitted using the same radio resources, and a base station and a user terminal adapted to perform said method.

### Background

Besides having significantly enhanced throughput, fourth generation (4G) cellular wireless access systems are expected to be cost efficient and to provide sufficient performance even at the cell edge. Using the so-called radial space-division multiple access (RDMA), the system's spectral efficiency can be significantly improved, and fairness among users without increasing the number of antennas and without requiring fast backbone communication and synchronization between base stations can be provided. The basic idea is to increase the capacity of the multi-user channel under fairness constraints by exploiting not only the angular dimension of space, as in space-division multiple access (SDMA), but also the radial dimension by using simultaneous transmission of multiple signals over the same radio resource and joint detection in the receiver. Significant throughput gains are achieved with low complexity methods requiring only long term channel statistics and no instantaneous channel state information at the transmitter. These throughput gains can be achieved without requiring more advanced analogue hardware or increasing bandwidth or transmit power.

### Summary

To increase the spectrum efficiency, in radial space-division multiple access (RDMA), more than one user terminal participate in the scheduling on the same resource, as e.g. on the same frequency, at the same time, as e.g. in the same subframe. As an example, two radio signals with different power levels, a low-power data stream and a high-power data stream, are superimposed and transmitted in the same frame resource, i.e. in the same burst. For the RDMA scheme in downlink, the low-power data stream usually is transmitted to the user terminal which is closer to the base station due to the lower path loss, and the high-power data stream usually is transmitted to the user terminal which is farther from the base station due to the higher path loss.

To decode its own point to point data stream located in the burst, a user terminal gets all the required information, as e.g. location of the burst, modulation and coding scheme and redundancy version, in a downlink grant description, which is individual for each user terminal.

In the patent application WO 2008/103313 A2, a method and apparatus for successive interference cancellation performed by a wireless transmit/receive unit WTRU using downlink control information of other WTRUs using the same resource is described. The downlink control information of other WTRUs may be transmitted via WTRU-specific control signalling to each of the WTRUs, or as an alternative, MIMO and/or transport information of the other WTRUs may be transmitted via resource specific common control signalling.

In the paper from Puttegowda K. et al with the title "On the effect of cancellation order in successive interference cancellation for CDMA systems", Vehicular Technology Conference, 6 October 2003, a method for successive interference cancellation using different ordering schemes for ordering the order in which signals are detected is disclosed.

In the document 3GPP TSG-RAN WG1 #44, R1-060455 from Qualcomm Europe with the title "Control Channel Issues for DL MIMO, 9 February 2006, a method for successive interference cancellation using signalling of downlink control information on the downlink shared control channel is disclosed. There, it is also disclosed that each scheduled UE shall be informed of the allocated time-frequency resources, transmit formats a.s.o. of all other user terminals, which leads to a significantly increased downlink control overhead.

In the document 3GPP TSG RAN WGI #58bis, R1-093773 from Alcatel Lucent with the title "Single-cell MU-MIMO for LTE-A", 12 October 2009, a method for successive interference cancellation using signalling of downlink control information to the UE such as number of co-scheduled UEs, identity of DRS patterns and DRS sequences used for other co-scheduled UEs, and exact resource allocations for any co-scheduled UEs is disclosed.

The main problem of the method for downlink communication by means of a downlink superimposed radio signal according to the prior art is, that the low-power user terminal, i.e. the user terminal which is closer to the base station, can not decode its low-power data stream, as the high-power data stream is superimposed on its low-power data stream using the same resource.

The object of the invention is thus to enable a user terminal to decode its own data stream in case that another data stream of another user terminal is superimposed using the same resource, so that a method for downlink communication by means of a downlink superimposed radio signal can be performed.

This object is achieved by a method for downlink communication between a base station and a user terminal by means of a downlink superimposed radio signal comprising downlink data for the user terminal and for at least one further user terminal that are transmitted using the same radio resources, wherein signaling information is sent in downlink from the base station to the user terminal indicating user terminals that are scheduled for downlink data transmission on said same radio resources with higher power than said user terminal, the user terminal searches in downlink for control information in user terminal specific grants for said user terminals that are scheduled for downlink data transmission on said same radio resources with higher power than said user terminal, the downlink data for the user terminal are transmitted with lower power than the downlink data for the at least one further user terminal, the user terminal decodes the downlink data for the at least one further user terminal by means of said control information, the user terminal successively reduces the superimposed radio signal by decoding the downlink data for the at least one further user terminal in the order of the downlink transmission power starting with the highest one, reconstructing a radio signal of the downlink data for the at least one further user terminal, and subtracting the radio signal of the downlink data for the at least one further user terminal from the superimposed radio signal, and the user terminal decodes its own downlink data using the superimposed radio signal that has been reduced by the radio signal for the at least one further user terminal.

The object is furthermore achieved by a base station for downlink communication with a user terminal by means of a downlink superimposed radio signal comprising downlink data for the user terminal and for at least one further user terminal that are transmitted using the same radio resources, said base station comprising at least one processing means adapted to send signaling information in downlink to the user terminal indicating user terminals that are scheduled for downlink data transmission on said same radio resources with higher power than said user terminal, adapted to send control information in downlink to the user terminal in user terminal specific grants for said user terminals scheduled for downlink data transmission on said same radio resources with higher power than said user terminal that enables the user terminal to decode the downlink data for the at least one further user terminal, and adapted to transmit the downlink data for the user terminal with lower power than the downlink data for the at least one further user terminal.

The object is furthermore achieved by a user terminal for downlink communication with a base station by means of a downlink superimposed radio signal comprising downlink data for the user terminal and for at least one further user terminal that are transmitted using the same radio resources, said user terminal comprising at least one processing means adapted to receive signaling information in downlink indicating user terminals that are scheduled for downlink data transmission on said same radio resources with higher power than said user terminal, adapted to search in downlink for control information in user terminal specific grants for said user terminals that are scheduled for downlink data transmission on said same radio resources with higher power than said user terminal, adapted to successively reduce the superimposed radio signal by decoding the downlink data for the at least one further user terminal in the order of the downlink transmission power starting with the highest one, reconstructing the radio signal of the downlink data for the at least one further user terminal, and subtracting the radio signal of the downlink data for the at least one further user terminal from the superimposed radio signal, and adapted to decode its own downlink data using the superimposed radio signal that has been reduced by the radio signal for the at least one further user terminal.

In order to decode its low-power data stream, a low-power user terminal, i.e. the user terminal which is closer to the base station, has to receive and decode the high-power data stream of the user terminal which is farther from the base station too.

To be able to decode the superimposed high-power data stream of the high-power user terminal, i.e. of the user terminal which is farther from the base station, the low-power user terminal needs additional information, as e.g. the modulation and coding scheme and the redundancy version of the superimposed high-power data stream. In methods according to the prior art, no means are foreseen to provide said information of a foreign burst, i.e. of the high-power data stream, to the low-power user terminal.

According to an embodiment of the invention, the grant descriptions of the superimposed point to point data streams are transmitted to user terminals involved in downlink data transmission on the same radio resources by introducing an RDMA grouping of user terminals for downlink data transmission on the same radio resources and additional higher layer signaling of information related to said RDMA grouping , while reusing the already defined formats of the grants sent e.g. via the physical downlink control channel (PDCCH) in Long Term Evolution (LTE) without changes.

Possible RDMA groups of user terminals for downlink data transmission on the same radio resources are defined by identifying potential RDMA partner user terminals for a low-power user terminal, e.g. due to the capabilities of user terminals to decode downlink data from other user terminals or based on path losses. RDMA groups of user terminals for downlink data transmission on the same radio resources are announced e.g. by signaling the cell-specific radio network temporary identifiers (C-RNTIs) of the high-power user terminals, i.e. the C-RNTIs of the RDMA partner user terminals, to the low-power user terminal. The low-power user terminal is then able to search for grants of the high-power user terminals after having found its own grant.

In order to restrict the possible search spaces of the grants, a corresponding aggregation level can be assigned optionally to each C-RNTI of the RDMA partner user terminals, i.e. the aggregation level range indicates, in which range the low-power user terminal shall search for the corresponding high-power grant. In principle, there are four different amounts of resources defined for the grants, which are the so-called aggregation levels 1, 2, 4 and 8 with a number of 1, 2, 4 and 8 control channel elements respectively. A grant for a transmission to or from a user terminal experiencing very good radio conditions, i.e. the best case, will thus consume only one control channel element, while a grant for a transmission to or from a user terminal experiencing very bad radio conditions, i.e. worst case, will consume eight control channel elements.

In a first step, a base station defines an RDMA group of user terminals by identifying which user terminals can best be simultaneously served on the same radio resources. Then the low-power user terminal gets the information about the C-RNTIs of the potential RDMA partner user terminals, optionally together with the corresponding aggregation levels.

In a second step, the low-power user terminal searches and decodes legacy downlink control information (DCI) for its own C-RNTI. If such a DCI is present, the low-power user terminal proceeds to search for DCIs of any of the high-power data streams transmitted on the same radio resources, and if present, the low-power user terminal decodes the high power DCIs as well. Then the low-power user terminal can successively reconstruct the corresponding radio signal of the high-power data streams and successively subtract the corresponding radio signal of the high power data streams from the superimposed radio signal in the order of the downlink transmission power starting with the highest one.

In a third step, the low-power data stream can be extracted from the resulting radio signal, which does not contain the high-power data streams anymore.

The high-power user terminal with the highest downlink transmission power has to search and decode its own legacy DCI only. Hence the high-power user terminal with the highest downlink transmission power does not need to know any RDMA specific information, and thus performs the decoding of its grant and data stream independently from the low-power user terminal.

The invention is not limited to the superposition of two radio signals, but in principle n radio signals can be superimposed when transmissions are performed to more than one of the potential high-power user terminals simultaneously. Thus a number of n DCIs can be present for several bursts which all are superimposed. As mentioned above, an aggregation level range value, if present, limits the effort of a user terminal to search for the higher power DCIs, as the user terminal only has to search for the DCIs on or above the corresponding aggregation level.

The DCI formats used for the embodiments of the invention can be legacy DCI formats, so that no change of the current specification of the DCI formats e.g. used in LTE is needed.

Besides the general ability to participate in the RDMA transmission scheme, the change of the behavior of an RDMA capable user terminal compared to the behavior of a legacy user terminal for LTE release 8 is that the RDMA capable user terminal has to listen to more than one downlink grant starting with grants related to its own cell-specific radio network temporary identifier (C-RNTI) followed by additional grants of higher-power user terminals. Then, the RDMA capable user terminal subtracts each of the radio signals of the additional data streams from the overall received radio signal. The data stream which is related to the cell-specific radio network temporary identifier (C-RNTI) of the RDMA capable user terminal is considered to be the own data stream of the RDMA capable user terminal. The data stream of the RDMA capable user terminal is obtained out of the remaining radio signal and is then transferred to the higher layers in the last step. In contrast, the higher-power data streams are not transferred to the higher layers.

A mixed operation of legacy user terminals and RDMA capable user terminals is possible. A legacy user terminal can be operated without RDMA or as the high-power user terminal as described above in an embodiment with a high-power data stream and a low-power data stream which are superimposed. In embodiments with more than two superimposed data streams, a legacy user terminal can be the highest-power user terminal.

In the current Third Generation Partnership Project Long Term Evolution (3GPP LTE) release 8 system, no means are foreseen to transmit the grant description of a point to point data stream for a first user terminal to a second user terminal. Thus, according to an embodiment of the invention, a solution to simultaneously and highly efficient transmit grant descriptions of superimposed point to point data streams to user terminals involved in the RDMA transmission is provided.

The invention is described in the following within the framework of 3GPP LTE. However, as the invention is not restricted to 3GPP LTE, but can in principle be applied in other networks that can exploit the radial dimension by using simultaneous transmission of multiple signals over the same radio resource and joint detection in the receiver, like e.g. in WiMAX networks (WiMAX = Worldwide Interoperability for Microwave Access), in the following, instead of the term eNodeB, the more general term base station is used.

Further developments of the invention can be gathered from the dependent claims and the following description.

### Brief description of the figures

In the following the invention will be explained further making reference to the attached drawings.
Fig. 1 schematically shows a communication network in which the invention can be implemented.
Fig. 2 schematically shows the structure of a user terminal and a base station in which the invention can be implemented.
Fig. 3 schematically shows exemplarily the power density of three superimposed data streams.
Fig. 4 schematically shows exemplarily the signalling of two data streams using the same frequency resource.
Fig. 5 schematically shows an example of three superimposed data streams in an RDMA and an SDMA scheme according to an embodiment of the invention.
Fig. 6 schematically shows an example of RDMA grouping information for different user terminals according to an embodiment of the invention.

### Description of the embodiments

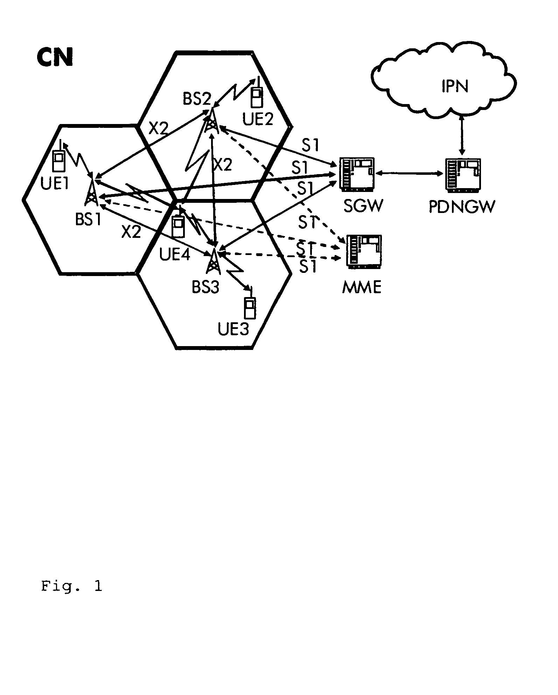

Fig. 1 shows as an example of a communication network CN in which the invention can be implemented according to the standard 3GPP LTE.

Said communication network CN comprises base stations BS1-BS3, user terminals UE1-UE4, a serving gateway SGW, a packet data network gateway PDNGW, and a mobility management entity MME.

Each of said user terminals UE1-UE4 is connected via radio connections to one or multiple of said base stations BS1-BS3, which is symbolized by flashes in fig. 1. The base stations BS1-BS3 are in turn connected to the serving gateway SGW and to the mobility management entity MME, i.e. to the evolved packet core (EPC), via the so-called S1 interface.

The base stations BS1-BS3 are connected among each other via the so-called X2 interface.

The serving gateway SGW is connected to the packet data network gateway PDNGW, which is in turn connected to an external IP network IPN.

The S1 interface is a standardized interface between a base station BS1-BS3, i.e. an eNodeB in this example, and the Evolved Packet Core (EPC). The S1 interface has two flavours, S1-MME for exchange of signalling messages between the base station BS1-BS3 and the mobility management entity MME and S1-U for the transport of user datagrams between the base station BS1-BS3 and the serving gateway SGW.

The X2 interface is added in 3GPP LTE standard in order to transfer the user plane signal and the control plane signal during handover, and in order to perform coordinated multipoint reception or transmission. For coordinated multipoint reception in uplink, base stations BS1-BS3 in the coordination area or group transfer the data which they received at their respective air interface to a coordinating device, e.g. to a master base station BS3 or to an external coordinated multipoint coordinating device which is not shown in fig. 1, preferably via the so-called X2 interface, i.e. via the backhaul, for evaluation of the data from the different base stations BS1-BS3.

The serving gateway SGW performs routing of the IP user data between the base station BS1-BS3 and the packet data network gateway PDNGW. Furthermore, the serving gateway SGW serves as a mobile anchor point during handover either between different base stations, or between different 3GPP access networks.

The packet data network gateway PDNGW represents the interface to the external IP network IPN and terminates the so-called EPS bearer (EPS = Evolved Packet System) which is established between a user terminal (UE1-UE4) and the respective serving base station (BS1-BS3).

The mobility management entity MME performs tasks of the subscriber management and the session management, and also performs the mobility management during handover between different access networks.

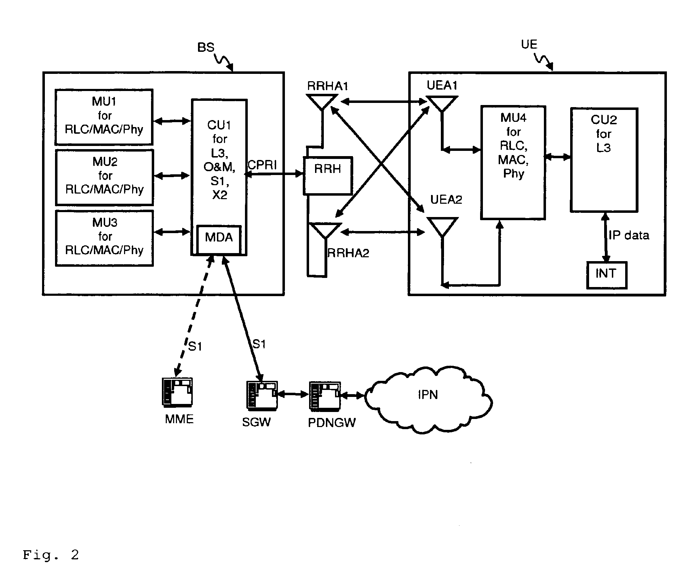

Fig. 2 schematically shows the structure of a user terminal and a base station BS in which the invention can be implemented.

The base station BS comprises by way of example three modem unit boards MU1-MU3 and a control unit board CU1, which in turn comprises a media dependent adapter MDA.

The three modem unit boards MU1-MU3 are connected to the control unit board CU1, and the control unit board CU1 is in turn connected to a remote radio head RRH via a so-called Common Public Radio Interface (CPRI).

The remote radio head RRH is connected by way of example to two remote radio head antennas RRHA1 and RRHA2 for transmission and reception of data via a radio interface.

The media dependent adapter MDA is connected to the mobility management entity MME and to the serving gateway SGW and thus to the packet data network gateway PDNGW, which is in turn connected to the external IP network IPN.

The user terminal UE comprises by way of example two user terminal antennas UEA1 and UEA2, a modem unit board MU4, a control unit board CU2, and interfaces INT.

The two user terminal antennas UEA1 and UEA2 are connected to the modem unit board MU4. The modem unit board MU4 is connected to the control unit board CU2, which is in turn connected to interfaces INT.

The modem unit boards MU1-MU4 and the control unit boards CU1, CU2 may comprise by way of example Field Programmable Gate Arrays (FPGA), Digital Signal Processors (DSP), switches and memories, like e.g. Double Data Rate Synchronous Dynamic Random Access Memories (DDR-SDRAM) in order to be enabled to perform the tasks described above.

The remote radio head RRH comprises the so-called radio equipment, e.g. modulators and amplifiers, like delta-sigma modulators (DSM) and switch mode amplifiers.

In downlink, IP data received from the external IP network IPN are transmitted from the packet data network gateway PDNGW via the serving gateway SGW to the media dependent adapter MDA of the base station BS on an EPS bearer. The media dependent adapter MDA allows for a connectivity of different media like e.g. video streaming or web browsing.

The control unit board CU1 performs tasks on layer 3, i.e. on the radio resource control (RRC) layer, such as measurements and cell reselection, handover and RRC security and integrity.

Furthermore, the control unit board CU1 performs tasks for Operation and Maintenance, and controls the S1 interfaces, the X2 interfaces, and the Common Public Radio Interface.

The control unit board CU1 sends the IP data received from the serving gateway SGW to a modem unit board MU1-MU3 for further processing.

The three modem unit boards MU1-MU3 perform data processing on layer 2, i.e. on the PDCP layer (PDCP = Packet Data Convergence Protocol) which is e.g. responsible for header compression and ciphering, on the RLC layer (RLC = Radio Link Control) which is e.g. responsible for segmentation and Automatic Repeat Request (ARQ), and on the MAC layer (MAC = Media Access Control) which is responsible for MAC multiplexing and Hybrid Repeat Request (HARQ).

Furthermore, the three modem unit boards MU1-MU3 perform data processing on the physical layer, i.e. coding, modulation, and antenna and resource-block mapping.

The coded and modulated data are mapped to antennas and resource blocks and are sent as transmission symbols from the modem unit board MU1-MU3 via the control unit board CU over the Common Public Radio Interface to the remote radio head and the respective remote radio head antenna RRHA1, RRHA2 for transmission over an air interface.

The Common Public Radio Interface (CPRI) allows the use of a distributed architecture where base stations BS, containing the so-called radio equipment control, are connected to remote radio heads RRH preferably via lossless fibre links that carry the CPRI data. This architecture reduces costs for service providers because only the remote radio heads RRH containing the so-called radio equipment, like e.g. amplifiers, need to be situated in environmentally challenging locations. The base stations BS can be centrally located in less challenging locations where footprint, climate, and availability of power are more easily managed.

The user terminal antennas UE1, UE2 receive the transmission symbols, and provide the received data to the modem unit board MU4.

The modem unit board MU4 performs data processing on the physical layer, i.e. antenna and resource-block demapping, demodulation and decoding.

Furthermore, the modem unit board MU4 performs data processing on layer 2, i.e. on the on the MAC layer (MAC = Media Access Control) which is responsible and Hybrid Repeat Request (HARQ) and for MAC demultiplexing, on the RLC layer (RLC = Radio Link Control) which is e.g. responsible for reassembly and Automatic Repeat Request (ARQ), and on the PDCP layer (PDCP = Packet Data Convergence Protocol) which is e.g. responsible for deciphering and header compression.

The processing on the modem unit board MU4 results in IP data which are sent to the control unit board CU2, which performs tasks on layer 3, i.e. on the radio resource control (RRC) layer, such as measurements and cell reselection, handover and RRC security and integrity.

The IP data are transmitted from the control unit board CU2 to respective interfaces INT for output and interaction with a user.

In the uplink, data transmission is performed in an analogue way in the reverse direction from the user terminal UE to the external IP network IPN.

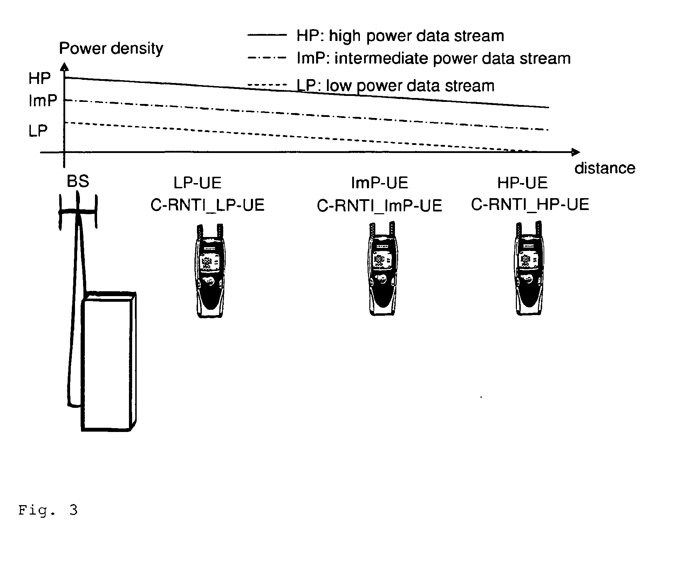

Fig. 3 schematically shows exemplarily the power density of three superimposed downlink data streams HP, ImP, LP dependent on the distance from the base station BS. The power density of the downlink data streams HP, ImP, LP decreases with increasing distance from the base station.

The downlink data stream LP with the lowest power density belongs to the user terminal LP-UE which has the smallest distance to the base station BS.

The downlink data stream ImP with the intermediate power density belongs to the user terminal ImP-UE which has the intermediate distance to the base station BS.

The downlink data stream HP with the highest power density belongs to the user terminal HP-UE which has the largest distance to the base station BS.

In order to decode its low-power data stream LP, the user terminal LP-UE also has to decode the high-power data stream HP of the user terminal HP-UE, and the intermediate-power data stream ImP of the user terminal ImP-UE, as the three data streams HP, ImP, LP are transmitted using the same resource blocks. Thus, the user terminal LP-UE needs additional information to be enabled to decode the data streams HP and ImP which it gets according to an embodiment of the invention as described in the following.

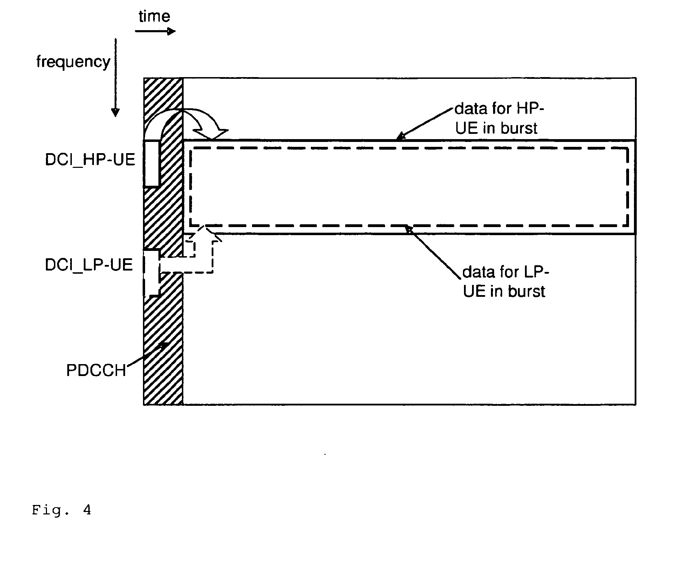

In fig. 4, the time-frequency resources used for downlink transmission are depicted. Fig. 4 schematically shows exemplarily the signalling of two data streams, a high-power data stream of a high-power user terminal HP-UE and a low-power data stream of a low-power user terminal LP-UE using the same frequency resources, i.e. the same resource blocks in the same burst.

The time-frequency resources of the so-called control region, which is indicated by a striped area in the time-frequency grid, are used to build so-called physical downlink control channels (PDCCH). So-called resource elements further grouped to so-called resource element groups within the control region are used as so-called control channel elements to build the physical downlink control channels (PDCCH).

A physical downlink control channel carries downlink control information (DCI), which includes downlink grants, i.e. downlink scheduling assignments comprising resource indications of the physical downlink shared channel (PDSCH), indications of the used transport formats and information about the hybrid automatic repeat request (HARQ) processing.

In fig. 4, the downlink control information DCI_HP-UE for the high-power user terminal HP-UE, and the downlink control information DCI_LP-UE for the low-power user terminal LP-UE indicate that the same time-frequency resources are used in a subframe, i.e. in a burst, for data transmission.

To be able to decode the high-power data stream, the low-power user terminal LP-UE needs information about the high-power data stream, as e.g. the related cell-specific radio network temporary identifier (C-RNTI), the used modulation and coding scheme (MCS), and the used redundancy version (RV) in addition to the announcement of information required for decoding of its own low-power data stream. The cell-specific radio network temporary identifier (C-RNTI) is an identity used for signaling purposes between the user terminal and the network. The modulation and coding scheme (MCS) indicates which modulation scheme, as e.g. QAM (QAM = quadrature amplitude modulation) or QPSK (QPSK = quadrature phase shift keying), in combination with which coding rate is used. As not all the bits that are generated by the coding scheme must be sent, the redundancy version indicates, which of the coded bits are really sent.

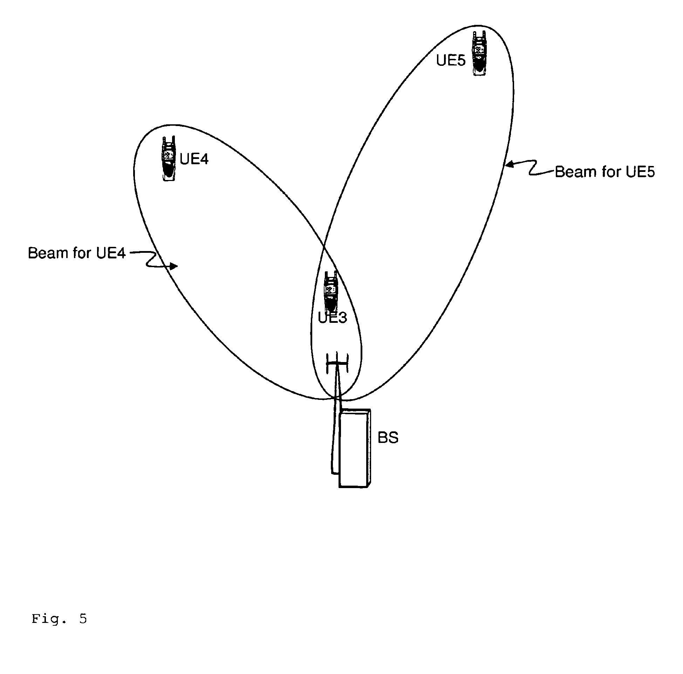

Fig. 5 schematically shows an example of three superimposed data streams in an RDMA and an SDMA scheme according to an embodiment of the invention.

A base station BS serves three user terminals UE3, UE4 and UE5. A downlink data stream for the user terminal UE4 is transmitted in a beam for the user terminal UE4 using a dedicated modulation and coding scheme, a transmission power of intermediate strength, and beamforming, i.e. SDMA, together with the user terminal UE5. A downlink data stream for the user terminal UE5 is transmitted in a beam for the user terminal UE5 using another dedicated modulation and coding scheme, a transmission power of high strength, and beamforming, i.e. SDMA, together with the user terminal UE4. A downlink data stream for the user terminal UE3 is transmitted using yet another dedicated modulation and coding scheme, a transmission power of low strength, and an RDMA transmission scheme together with the user terminals UE4 and UE5 according to the invention as described above. Thus, the three data streams for the three user terminals UE3, UE4, and UE5 are all transmitted on the same frequency at the same time.

As can be seen in the figure 5, the proposed downlink communication according to the invention fully supports a mixed operation of RDMA with the user terminal UE3 as a low-power user terminal and the user terminals UE4 and UE5 as high-power user terminals, and beamforming applied for the downlink transmission to the user terminals UE4 and UE5. In this embodiment, only the low-power user terminal UE3 needs to be aware of the two other data streams for the user terminals UE4 and UE5, as it first has to decode and subtract the highest power data stream for the user terminal UE5, and then the intermediate power data stream for the user terminal UE4 from the received radio signal before it decodes its own low-power data stream.

The user terminals UE4 and UE5 do not need to have any information about the other two data streams, as they only receive their own data stream.

No known signaling scheme supports such a mixture of RDMA with other beamforming schemes.

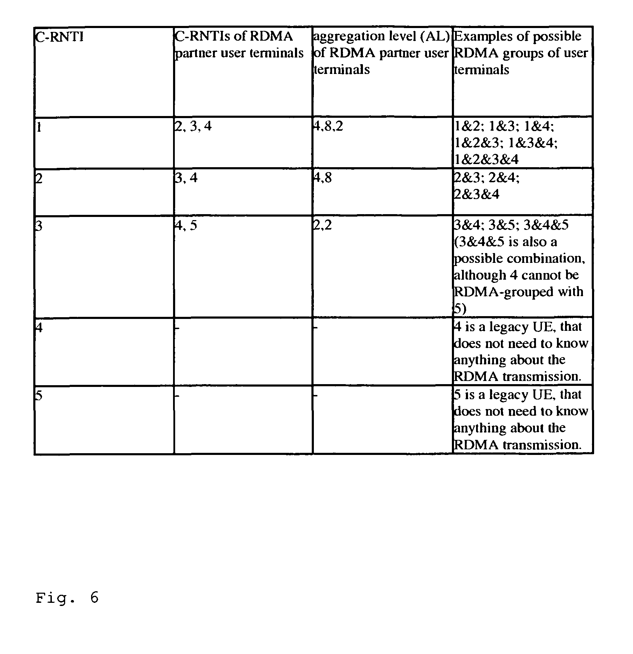

Fig. 6 schematically shows an example of RDMA grouping information for different user terminals according to an embodiment of the invention.

A base station can decide a-priori, i.e. before a downlink transmission is started, which user terminals can be scheduled as low-power user terminals, e.g. due to their capabilities to work as an RDMA user terminal, i.e. due to their capabilities to decode downlink data from other user terminals, and based on path loss. RDMA capable user terminals can work as low- or high-power user terminals, whereas non-RDMA capable legacy user terminals can potentially work as high-power user terminals. Hence, the base station may inform the corresponding low-power user terminals to decode the DCIs of potential higher power user terminals in addition to their own grants from then on. As the path loss of the user terminals can vary during operation, the scheduling mechanism has to be performed regularly and changes have to be signaled to the affected user terminals. Based on such a scheduling mechanism, RDMA groups of user terminals for downlink data transmission on the same radio resources are defined.

Information about an RDMA group of user terminals for downlink data transmission on the same radio resources is signaled via higher layer communication, as e.g. a radio resource control (RRC) layer in LTE, from the base station to user terminals of the RDMA group. A user terminal of the RDMA group e.g. receives information which other user terminals of the RDMA group may receive a data stream with higher power than its own data stream.

During scheduling, the base station, for each subframe, forms pairs or groups of user terminals for which the radio signals can be superimposed. As a number of user terminals may belong to an RDMA group, the user terminals for which the radio signals can be superimposed can vary from subframe to subframe, i.e. the scheduler has some flexibility in defining RDMA pairs or groups on a per transmission time interval (TTI) basis.

Several of such RDMA pairs or groups of user terminals can be defined per subframe to ensure that as much as possible of the available radio resources can be used with the RDMA transmission scheme.

Additionally, for each cell-specific radio network temporary identifier (C-RNTI) of the RDMA partner user terminals, an aggregation level (AL) range may be signaled to limit the search of the RDMA partner DCI. This parameter identifies an aggregation level range, e.g. by a minimum aggregation level, on which the low-power user terminal shall search for the corresponding high-power grant.

The base station generates the grants such, that each grant contains the legacy information only. Furthermore, the base station generates the grants such, that each grant uses the aggregation level, e.g. a minimum aggregation level or an aggregation level range, which was defined and signaled corresponding to the C-RNTI of the respective user terminal.

A user terminal always first searches for grants dedicated to its own C-RNTI. If this grant is found, the user terminal searches for grants of C-RNTIs of RDMA partner user terminals and decodes them too. If the parameter range of the aggregation level is defined for the C-RNTIs of the RDMA partner user terminals, the user terminal searches for the next grant on the specified aggregation level range only. The search for additional grants is performed for all C-RNTIs of potential RDMA partner user terminals.

Besides the general ability to participate in the RDMA transmission scheme, the change of the behavior compared to the legacy user terminal behavior in LTE release 8 for the RDMA user terminals is that it has to listen to more than one downlink grant starting with its own C-RNTI and successively searches for additional grants of other user terminals in the RDMA group that were previously signaled via higher layer signaling. If other grants are found, the user terminal subtracts each of the corresponding radio signals of the additional data streams from the overall received radio signal. The subtraction is performed in the order of the downlink transmission power starting with the highest power data stream. The data stream found with its own C-RNTI is considered to be the own data stream and is received out of the remaining radio signal and is then transferred to the higher layers in the last step. In contrast, the higher power data streams are not transferred to the higher layers.

The user terminal must know the order of the downlink transmission power. Thus, the base station signals to the user terminal information about the downlink transmission power of the RDMA partner user terminals. Alternatively, the order of transmission of the signaling information for the RDMA group of user terminals, as e.g. the order of transmission of the C-RNTIs of the RDMA group of user terminals, is correlated to an order of the strength of the downlink transmission power of the indicated user terminals.

In another embodiment, the user terminal can also correlate the aggregation level used for the grant of an RDMA partner user terminal with the strength of the downlink transmission power, i.e. the user terminal assumes that a higher aggregation level of the grant is related to a higher downlink transmission power. In case that two RDMA partner user terminals use the same aggregation level, the one with the more robust modulation and coding scheme indicated in the grant, i.e. the one with the more robust modulation or with the smaller coding rate, is assumed to be the RDMA partner user terminal with the higher downlink transmission power. If the decoding according to this scheme of the downlink data stream of the RDMA partner user terminal with the assumed higher downlink transmission power was not successful, the user terminal tries to decode the downlink data stream of the RDMA partner user terminal with the assumed next lower downlink transmission power. Applying this scheme to an RDMA group of 3 RDMA partner user terminals, a maximum number of 4 trials to finally decode the data stream of the user terminal must be performed. Applying this scheme to an RDMA group of 4 RDMA partner user terminals, a maximum number of 7 trials to finally decode the data stream of the user terminal must be performed.

The table depicted in fig. 6 shows an example of possible RDMA groups of user terminals which are scheduled out of a group of 5 user terminals.

In the first column, the respective C-RNTI 1 to 5 of the user terminal to which signaling information concerning the RDMA group of user terminals is sent, is indicated. The user terminals with C-RNTIs=1, 2, 3 are RDMA-capable user terminals, and the user terminals with C-RNTIs=4, 5 are legacy user terminals.

In the second column, the respective C-RNTIs of potential RDMA partner user terminals, i.e. of user terminals that can be scheduled for downlink data transmission on the same radio resources with higher power than the user terminal given in column 1, are indicated.

In the third column, the respective aggregation levels (AL) of the RDMA partner user terminals given in column 2 are indicated.

In the fourth column, examples of possible RDMA groups of user terminals are indicated.

In the first row, it is indicated, that the user terminal indicated with C-RNTI=1 has the potential RDMA partner user terminals indicated with C-RNTI=2, 3, 4 and respective aggregation levels AL= 4, 8, 2. In the last column, possible combinations of user terminals as an RDMA group are given, with the user terminal with the C-RNTI=1 being the low-power user terminal that has to decode the data streams from the other user terminals of the RDMA group. Such an RDMA group comprises e.g. the user terminals 1 and 2, or the user terminals 1, 3 and 4, i.e. C-RNTI=2 together with AL=4, or C-RNTI=3, 4 together with the AL=8, 2 respectively is signalled from the base station to the low-power user terminal with C-RNTI=1.

In the second row, it is indicated, that the user terminal indicated with C-RNTI=2 has the potential RDMA partner user terminals indicated with C-RNTI=3, 4 and respective aggregation levels AL= 4, 8. In the last column, possible combinations of user terminals as an RDMA group are given, with the user terminal with the C-RNTI=2 being the low-power user terminal that has to decode the data streams from the other user terminals of the RDMA group. Such an RDMA group comprises e.g. the user terminals 2 and 3, or the user terminals 2, 3 and 4, i.e. C-RNTI=3 together with AL=4, or C-RNTI=3, 4 together with the AL=4, 8 respectively is signalled from the base station to the low-power user terminal with C-RNTI=2.

In the third row, it is indicated, that the user terminal indicated with C-RNTI=3 has the potential RDMA partner user terminals indicated with C-RNTI=4, 5 and respective aggregation levels AL=2, 2. In the last column, possible combinations of user terminals as an RDMA group are given, with the user terminal with the C-RNTI=3 being the low-power user terminal that has to decode the data streams from the other user terminals of the RDMA group. Such an RDMA group comprises e.g. the user terminals 3 and 4, or the user terminals 3 and 5, i.e. C-RNTI=4 together with AL=2, or C-RNTI=5 together with the AL=2 respectively is signalled from the base station to the low-power user terminal with C-RNTI=3. The embodiment depicted in the third row shall correspond to the embodiment depicted in fig. 5, i.e. a mixed operation of RDMA with the user terminal with C-RNTI=3 as low-power user terminal and the legacy user terminals with C-RNTIs=4, 5 as high-power user terminals, and beamforming applied for the downlink transmission to the user terminals with C-RNTIs=4, 5. In this embodiment, an RDMA group comprising the user terminals with C-RNTIs=3, 4, 5 is also possible, although the legacy user terminal with C-RNTI=4 can not be RDMA-grouped with the legacy user terminal with C-RNTI=5.

As the user terminals with C-RNTIs=4, 5 are legacy user terminals, they do not have any potential RDMA partner user terminals. Thus, no information related to the RDMA transmission is signalled from the base station to the user terminals with C-RNTIs=4, 5, which is indicated in the rows 4 and 5.

## Claims

1. A method for downlink communication between a base station (BS) and a user terminal (LP-UE) by means of a downlink superimposed radio signal comprising downlink data for the user terminal (LP-UE) and for at least one further user terminal (ImP-UE, HP-UE) that are transmitted using the same radio resources, **wherein**
• signaling information is sent in downlink from the base station (BS) to the user terminal (LP-UE) indicating user terminals that are scheduled for downlink data transmission on said same radio resources with higher power than said user terminal (LP-UE),
• the user terminal (LP-UE) searches in downlink for control information in user terminal specific grants (DCI_HP-UE) for said user terminals that are scheduled for downlink data transmission on said same radio resources with higher power than said user terminal (LP-UE),
• the downlink data for the user terminal (LP-UE) are transmitted with lower power than the downlink data for the at least one further user terminal (ImP-UE, HP-UE),
• the user terminal (LP-UE) decodes the downlink data for the at least one further user terminal (ImP-UE, HP-UE) by means of said control information,
• the user terminal (LP-UE) successively reduces the superimposed radio signal by decoding the downlink data for the at least one further user terminal (ImP-UE, HP-UE) in the order of the downlink transmission power starting with the highest one, reconstructing a radio signal of the downlink data for the at least one further user terminal (ImP-UE, HP-UE), and subtracting the radio signal of the downlink data for the at least one further user terminal (ImP-UE, HP-UE) from the superimposed radio signal,
• and the user terminal (LP-UE) decodes its own downlink data using the superimposed radio signal that has been reduced by the radio signal for the at least one further user terminal (ImP-UE, HP-UE).

2. A method according to claim 1, **characterized in, that** said signaling information comprises information about the downlink transmission power of the user terminals.

3. A method according to claim 1, **characterized in, that** an order of transmission of the signaling information for the indicated user terminals is correlated to an order of the strength of the downlink transmission power of the indicated user terminals.

4. A method according to claim 1, 2, and 3 **characterized in, that** the signaling information comprises at least one aggregation level range (AL) on which the user terminal (LP-UE) shall search for the control information for the user terminals.

5. A method according to claim 1, **characterized in, that** the signaling information is signaled on a radio resource control layer.

6. A method according to claim 1, **characterized in, that** the control information is sent in downlink from the base station (BS) to the user terminal (LP-UE) via at least one physical downlink control channel.

7. A method according to claim 6, **characterized in, that** the control information is sent in a legacy DCI format for downlink control information of the 3GPP Long Term Evolution Standard release 8.

8. A method according to claim 1, **characterized in, that** the user terminal (LP-UE) is enabled to perform radial space-division multiple access.

9. A method according to claim 1, **characterized in, that** the user terminal (LP-UE) starts searching in downlink for its own control information, and successively searches for control information for said user terminals that are scheduled for downlink data transmission on said same radio resources with higher power than said user terminal (LP-UE).

10. A method according to claim 1, **characterized in, that** the base station (BS) repeatedly determines based on path losses and capabilities to decode downlink data from other user terminals at least one group of user terminals that are scheduled for downlink data transmission on same radio resources.

11. A method according to claim 10, **characterized in, that** at least one group of user terminals that are scheduled for downlink data transmission on same radio resources are determined for a time span of at least one subframe.

12. A base station (BS) for downlink communication with a user terminal (LP-UE) by means of a downlink superimposed radio signal comprising downlink data for the user terminal (LP-UE) and for at least one further user terminal (ImP-UE, HP-UE) that are transmitted using the same radio resources, said base station (BS) comprising at least one processing means adapted to
• send signaling information in downlink to the user terminal (LP-UE) indicating user terminals that are scheduled for downlink data transmission on said same radio resources with higher power than said user terminal (LP-UE),
• send control information in downlink to the user terminal (LP-UE) in user terminal specific grants (DCI_HP-UE) for said user terminals scheduled for downlink data transmission on said same radio resources with higher power than said user terminal (LP-UE) that enables the user terminal (LP-UE) to decode the downlink data for the at least one further user terminal (ImP-UE, HP-UE),
• and transmit the downlink data for the user terminal (LP-UE) with lower power than the downlink data for the at least one further user terminal (ImP-UE, HP-UE).

13. A user terminal (LP-UE) for downlink communication with a base station (BS) by means of a downlink superimposed radio signal comprising downlink data for the user terminal (LP-UE) and for at least one further user terminal (ImP-UE, HP-UE) that are transmitted using the same radio resources, said user terminal (LP-UE) comprising at least one processing means adapted to
• receive signaling information in downlink indicating user terminals that are scheduled for downlink data transmission on said same radio resources with higher power than said user terminal (LP-UE),
• search in downlink for control information in user terminal specific grants (DCI_HP-UE) for said user terminals that are scheduled for downlink data transmission on said same radio resources with higher power than said user terminal (LP-UE),
• successively reduce the superimposed radio signal by decoding the downlink data for the at least one further user terminal (ImP-UE, HP-UE) by means of said control information in the order of the downlink transmission power starting with the highest one, reconstructing a radio signal of the downlink data for the at least one further user terminal (ImP-UE, HP-UE), and subtracting the radio signal of the downlink data for the at least one further user terminal (ImP-UE, HP-UE) from the superimposed radio signal,
• and decode its own downlink data using the superimposed radio signal that has been reduced by the radio signal for the at least one further user terminal (ImP-UE, HP-UE).

14. A communication network (CN) comprising at least one base station (BS) according to claim 12 and at least one user terminal (LP-UE) according to claim 13.

## Patentansprüche

1. Verfahren zur Downlink-Kommunikation zwischen einer Basisstation (BS) und einem Teilnehmerendgerät (LP-UE) mittels eines downlink-überlagerten Funksignals mit Downlink-Daten für das Teilnehmerendgerät (LP-UE) und für mindestens ein weiteres Teilnehmerendgerät (ImP-UE, HP-UE), welche unter Verwendung derselben Funkressourcen übertragen werden, **wobei**
• Signalisierungsinformationen auf einer Downlink-Verbindung von der Basisstation (BS) an das Teilnehmerendgerät (LP-UE) gesendet werden, welche den Teilnehmerendgeräten angeben, dass sie für die Downlink-Datenübertragung auf den besagten selben Funkressourcen mit höherer Leistung als das besagte Teilnehmerendgerät (LP-UE) geplant sind,
• das Teilnehmerendgerät (LP-UE) auf der Downlink-Verbindung nach Steuerungsinformationen in teilnehmerendgerätspezifischen Genehmigungen (DCI_HP-UE) für die besagten Teilnehmerendgeräte, die für die Downlink-Datenübertragung auf den besagten selben Funkressourcen mit höherer Leistung als das besagte Teilnehmerendgerät (LP-UE) geplant sind, sucht,
• die Downlink-Daten für das Teilnehmerendgerät (LP-UE) mit niedrigerer Leistung als die Downlink-Daten für das mindestens eine weitere Teilnehmerendgerät (ImP-UE, HP-UE) übertragen werden,
• das Teilnehmerendgerät (LP-UE) die Downlink-Daten für das mindestens eine weitere Teilnehmerendgerät (ImP-UE, HP-UE) anhand der besagten Steuerungsinformationen decodiert,
• das Teilnehmerendgerät (LP-UE) sukzessiv das überlagerte Funksignal durch Decodieren der Downlink-Daten für das mindestens eine weitere Teilnehmerendgerät (ImP-UE, HP-UE) reduziert, indem die Downlink-Übertragungsleistung mit der höchsten Leistung beginnt, ein Funksignal der Downlink-Daten für das mindestens eine weitere Teilnehmerendgerät (ImP-UE, HP-UE) rekonstruiert wird und das Funksignal der Downlink-Daten für das mindestens eine weitere Teilnehmerendgerät (ImP-UE, HP-UE) von dem überlagerten Funksignal subtrahiert wird,
• und das Teilnehmerendgerät (LP-UE) seine eigenen Downlink-Daten unter Verwendung des überlagerten Funksignals, welcher durch das Funksignal für das mindestens eine weitere Teilnehmerendgerät (ImP-UE, HP-UE) reduziert wurde, decodiert.

2. Verfahren nach Anspruch 1, **dadurch gekennzeichnet, dass** die besagten Signalisierungsinformationen Informationen über die Downlink-Übertragungsleistung der Teilnehmerendgeräte enthalten.

3. Verfahren nach Anspruch 1, **dadurch gekennzeichnet, dass** eine Größenordnung der Übertragung der Signalisierungsinformationen für die angegebenen Teilnehmerendgeräte mit einer Größenordnung der Stärke der Downlink-Übertragungsleistung der angegebenen Teilnehmerendgeräte korreliert ist.

4. Verfahren nach Anspruch 1, 2, und 3 **dadurch gekennzeichnet, dass** die Signalisierungsinformationen mindestens einen Aggregationsebenenbereich (AL), auf welchem das Teilnehmerendgerät (LP-UE) nach den Steuerungsinformationen für die Teilnehmerendgeräte suchen soll, umfassen.

5. Verfahren nach Anspruch 1, **dadurch gekennzeichnet, dass** die Signalisierungsinformationen auf einer Funkressourcen-Steuerungsschicht signalisiert werden.

6. Verfähren nach Anspruch 1, **dadurch gekennzeichnet, dass** die Steuerungsinformationen auf einer Downlink-Verbindung von der Basisstation (BS) an das (LP-UE) über mindestens einen physikalischen Downlink-Steuerungskanal gesendet werden.

7. Verfahren nach Anspruch 6, **dadurch gekennzeichnet, dass** die Steuerungsinformationen in einem DCI-Vorläuferformat für Downlink-Steuerungsinformationen des 3GPP Long Term Evolution-Standards, Ausgabe 8, gesendet werden.

8. Verfahren nach Anspruch 1, **dadurch gekennzeichnet, dass** das Teilnehmerendgerät (LP-UE) fähig ist, einen radialen Raummultiplex-Mehrfachzugriff durchzuführen.

9. Verfahren nach Anspruch 1, **dadurch gekennzeichnet, dass** das Teilnehmerendgerät (LP-UE) damit beginnt, nach seinen eigenen Steuerungsinformationen auf der Downlink-Verbindung zu suchen, und sukzessiv nach Steuerungsinformationen für die besagten Teilnehmerendgeräte, die für eine Downlink-Datenübertragung auf den besagten selben Funkressourcen mit höherer Leistung als das besagte Teilnehmerendgerät (LP-UE) geplant sind, sucht.

10. Verfahren nach Anspruch 1, **dadurch gekennzeichnet, dass** die Basisstation (BS) basierend auf Pfadverlusten und den Fähigkeiten, Downlink-Daten von anderen Teilnehmerendgeräten zu decodieren, wiederholt mindestens eine Gruppe von Teilnehmerendgeräten ermittelt, die für eine Downlink-Datenübertragung auf denselben Funkressourcen geplant sind.

11. Verfahren nach Anspruch 10, **dadurch gekennzeichnet, dass** mindestens eine Gruppe von Teilnehmerendgeräten, die für eine Downlink-Datenübertragung auf denselben Funkressourcen geplant sind, für eine Zeitspanne mindestens eines Teilrahmens ermittelt wird.

12. Basisstation (BS) für die Downlink-Kommunikation mit einem Teilnehmerendgerät (LP-UE) mittels eines downlink-überlagerten Funksignals mit Downlink-Daten für das Teilnehmerendgerät (LP-UE) und für mindestens ein weiteres Teilnehmerendgerät (ImP-UE, HP-UE), welche unter Verwendung derselben Funkressourcen übertragen werden, wobei die besagte Basisstation (BS) mindestens ein Verarbeitungsmittel umfasst, welches für das Durchführen der folgenden Schritte ausgelegt ist:
• Senden von Signalisierungsinformationen auf einer Downlink-Verbindung an das Teilnehmerendgerät (LP-UE), welche Teilnehmerendgeräte angeben, die für eine Downlink-Datenübertragung auf den besagten selben Funkressourcen mit einer höheren Leistung als das besagte Teilnehmerendgerät (LP-UE) geplant sind,
• Senden von Steuerungsinformationen auf einer Downlink-Verbindung an das Teilnehmerendgerät (LP-UE) in teilnehmerendgerätspezifischen Genehmigungen (DCI_HP-UE) für die besagten Teilnehmerendgeräte, die für eine Downiink-Datenübertragung auf den besagten selben Funkressourcen mit einer höheren Leistung als das besagte Teilnehmerendgerät (LP-UE) geplant sind, welche es dem Teilnehmerendgerät (LP-UE) ermöglichen, die Downlink-Daten für das mindestens eine weitere Teilnehmerendgerät (ImP-UE, HP-UE) zu decodieren,
• und übertragen der Downlink-Daten für das Teilnehmerendgerät (LP-UE) mit einer niedrigeren Leistung als die Downlink-Daten für das mindestens eine weitere Teilnehmerendgerät (ImP-UE, HP-UE).

13. Teilnehmerendgerät (LP-UE) für die Downlink-Kommunikation mit einer Basisstation (BS) mittels eines downlink-überlagerten Funksignals mit Downlink-Daten für das Teilnehmerendgerät (LP-UE) und für mindestens ein weiteres Teilnehmerendgerät (ImP-UE, HP-UE), welcht unter Verwendung derselben Funkressourcen übertragen werden, wobei das besagte Teilnehmerendgerät (LP-UE) mindestens ein Verarbeitungsmittel umfasst, welches für das Durchführen der folgenden Schritte ausgelegt ist:
• Empfangen von Signalisierungsinformationen auf einer Downlink-Verbindung, welche Teilnehmerendgeräte angeben, die für eine Downlink-Datenübertragung auf den besagten selben Funkressourcen mit einer höheren Leistung als das besagte Teilnehmerendgerät (LP-UE) geplant sind,
• Suchen, auf der Downlink-Verbindung, nach Steuerungsinformationen in teilnehmerendgerätspezifischen Genehmigungen (DCI_HP-UE) für die besagten Teilnehmerendgeräte, die für eine Downlink-Datenübertragung auf den besagten selben Funkressourcen mit höherer Leistung als das besagte Teilnehmerendgerät (LP-UE) geplant sind,
• sukzessives Reduzieren des überlagerten Funksignals durch Decodieren der Downlink-Daten für das mindestens eine weitere Teilnehmerendgerät (ImP-UE, HP-UE) anhand der besagten Steuerungsinformationen, indem die Downlink-Übertragungsleistung mit der höchsten Leistung beginnt, ein Funksignal der Downlink-Daten für das mindestens eine weitere Teilnehmerendgerät (ImP-UE, HP-UE) rekonstruiert wird und das Funksignals der Downlink-Daten für das mindestens eine weitere Teilnehmerendgerät (ImP-UE, HP-UE) von dem überlagerten Funksignals subtrahiert wird,
• und Decodieren seiner eigenen Downlink-Daten unter Verwendung des überlagerten Funksignals, welches von dem Funksignal reduziert wurde, für das mindestens eine weitere Teilnehmerendgerät (ImP-UE, HP-UE).

14. Kommunikationsnetzwerk (CN) mit mindestens einer Basisstation (BS) gemäß Anspruch 12 und mindestens einem Teilnehmerendgerät (LP-UE) gemäß Anspruch 13.

## Revendications

1. Procédé de communication de liaison descendante entre une station de base (BS) et un terminal d'utilisateur (LP-UE) au moyen d'un signal radioélectrique superposé à la liaison descendante comprenant des données de liaison descendante pour le terminal d'utilisateur (LP-UE) et pour au moins un terminal d'utilisateur supplémentaire (ImP-UE, HP-UE) qui sont transmises en utilisant les mêmes ressources radioélectriques, selon lequel
• des informations de signalisation sont envoyées dans la liaison descendante de la station de base (BS) vers le terminal d'utilisateur (LP-UE) indiquant les terminaux d'utilisateur qui sont ordonnancés pour la transmission de données de liaison descendante sur lesdites mêmes ressources radioélectriques avec une puissance supérieure à celle dudit terminal d'utilisateur (LP-UE),
• le terminal d'utilisateur (LP-UE) recherche dans la liaison descendante des informations de commande dans les autorisations spécifiques au terminal d'utilisateur (DCI_HP-UE) pour lesdits terminaux d'utilisateur qui sont ordonnancés pour la transmission de données de liaison descendante sur lesdites mêmes ressources radioélectriques avec une puissance supérieure à celle dudit terminal d'utilisateur (LP-UE),
• les données de liaison descendante pour le terminal d'utilisateur (LP-UE) sont transmises avec une puissance inférieure à celle des données de liaison descendante pour l'au moins un terminal d'utilisateur supplémentaire (ImP-UE, HP-UE),
• le terminal d'utilisateur (LP-UE) décode les données de liaison descendante pour l'au moins un terminal d'utilisateur supplémentaire (ImP-UE, HP-UE) au moyen desdites informations de commande,
• le terminal d'utilisateur (LP-UE) réduit successivement le signal radioélectrique superposé en décodant les données de liaison descendante pour l'au moine un terminal d'utilisateur supplémentaire (ImP-UE, HP-UE) dans l'ordre des puissances de transmission de liaison descendante en commençant par la plus élevée, en reconstruisant un signal radioélectrique des données de liaison descendante pour l'au moins un terminal d'utilisateur supplémentaire (ImP-UE, HP-UE), et en soustrayant le signal radioélectrique des données de liaison descendante pour l'au moins un terminal d'utilisateur supplémentaire (ImP-UE, HP-UE) du signal radioélectrique superposé,
• et le terminal d'utilisateur (LP-UE) décode ses propres données de liaison descendante en utilisant le signal radioélectrique superposé qui a été réduit par le signal radioélectrique pour l'au moins un terminal d'utilisateur supplémentaire (ImP-UE, HF-UE).

2. Procédé selon la revendication 1, **caractérisé en ce que** lesdites informations de signalisation comprennent des informations sur la puissance de transmission de liaison descendante des terminaux d'utilisateur.

3. Procédé selon la revendication 1, **caractérisé en ce qu'**un ordre de transmission des informations de signalisation pour les terminaux d'utilisateur indiqués est corrélé avec un ordre de l'intensité de la puissance de transmission de liaison descendante des terminaux d'utilisateur indiqués.

4. Procédé selon la revendication 1, 2 et 3, **caractérisé en ce que** les informations de signalisation comprennent au moins une plage de niveau d'agrégation (AL) dans laquelle le terminal d'utilisateur (LP-UE) doit rechercher les informations de commande pour les terminaux d'utilisateur.

5. Procédé selon la revendication 1, **caractérisé en ce que** les informations de signalisation sont signalées sur une couche de commande de ressource radioélectrique.

6. Procédé selon la revendication 1, **caractérisé en ce que** les informations de commande sont envoyées dans la liaison descendante depuis la station de base (BS) vers le terminal d'utilisateur (LP-UE) par le biais d'au moins un canal de commande de liaison descendante physique.

7. Procédé selon la revendication 6, **caractérisé en ce que** les informations de commande sont envoyées dans un format DCI hérité pour les informations de commande de liaison descendante de la norme d'évolution à long terme du 3GPP, version 8.

8. Procédé selon la revendication 1, **caractérisé en ce que** le terminal d'utilisateur (LP-UE) est activé pour exécuter un accès multiple par répartition dans l'espace radial.

9. Procédé selon la revendication 1, **caractérisé en ce que** le terminal d'utilisateur (LP-UE) commande à chercher ses propres informations de commande dans la liaison descendante et recherche successivement des informations de commande pour lesdits terminaux d'utilisateur qui sont ordonnancés pour la transmission de données de liaison descendante sur lesdites mêmes ressources radioélectriques avec une puissance supérieure à celle dudit terminal d'utilisateur (LP-UE).

10. Procédé selon la revendication 1, **caractérisé en ce que** la station de base (BS) détermine de manière répétitive, en se basant sur les affaiblissements de trajet et les capacités à décoder les données de liaison descendante des autres terminaux d'utilisateur, au moins un groupe de terminaux d'utilisateur qui sont ordonnancés pour la transmission de données de liaison descendante sur les mêmes ressources radioélectriques.

11. Procédé selon la revendication 10, **caractérisé en ce qu'**au moins un groupe de terminaux d'utilisateur qui sont ordonnancés pour la transmission de données de liaison descendante sur les mêmes ressources radioélectriques est déterminé pendant un intervalle de temps d'au moins une sous-trame.

12. Station de base (BS) pour la communication de liaison descendante avec un terminal d'utilisateur (LP-UE) au moyen d'un signal radioélectrique superposé à la liaison descendante comprenant des données de liaison descendante pour le terminal d'utilisateur (LP-UE) et pour au moins un terminal d'utilisateur supplémentaire (ImP-UE, HP-UE) qui sont transmises en utilisant les mêmes ressources radioélectriques, ladite station de base (BS) comprenant au moins un moyen de traitement adapté pour
• envoyer des informations de signalisation dans la liaison descendante vers le terminal d'utilisateur (LP-UE) indiquant les terminaux d'utilisateur qui sont ordonnancés pour la transmission de données de liaison descendante sur lesdites mêmes ressources radioélectriques avec une puissance supérieure à celle dudit terminal d'utilisateur (LP-UE),
• envoyer des informations de commande dans la liaison descendante vers le terminal d'utilisateur (LP-UE) dans les autorisations spécifiques au terminal d'utilisateur (DCI_HP-UE) pour lesdits terminaux d'utilisateur qui sont ordonnancés pour la transmission de données de liaison descendante sur lesdites mêmes ressources radioélectriques avec une puissance supérieure à celle dudit terminal d'utilisateur (LP-UE) qui permettent au terminal d'utilisateur (LP-UE) de décoder les données de liaison descendante pour l'au moins un terminal d'utilisateur supplémentaire (ImP-UE, HP-UE),
• et transmettre les données de liaison descendante pour le terminal d'utilisateur (LP-UE) avec une puissance inférieure à celle des données de liaison descendante pour l'au moins un terminal d'utilisateur supplémentaire (ImP-UE, HP-UE).

13. Terminal d'utilisateur (LP-UE) pour la communication de liaison descendante avec une station de base (BS) au moyen d'un signal radioélectrique superposé à la liaison descendante comprenant des données de liaison descendante pour le terminal d'utilisateur (LP-UE) et pour au moins un terminal d'utilisateur supplémentaire (ImP-UE, HP-UE) qui sont transmises en utilisant les mêmes ressources radioélectriques, ledit terminal d'utilisateur (LP-UE) comprenant au moins un moyen de traitement adapté pour
• recevoir des informations de signalisation dans la liaison descendante indiquant les terminaux d'utilisateur qui sont ordonnancés pour la transmission de données de liaison descendante sur lesdites mêmes ressources radioélectriques avec une puissance supérieure à celle dudit terminal d'utilisateur (LP-UE),
• rechercher dans la liaison descendante des informations de commande dans les autorisations spécifiques au terminal d'utilisateur (DCI_HP-UE) pour lesdits terminaux d'utilisateur qui sont ordonnancés pour la transmission de données de liaison descendante sur lesdites mêmes ressources radioélectriques avec une puissance supérieure à celle dudit terminal d'utilisateur (LP-UE),
• réduire successivement le signal radioélectrique superposé en décodant les données de liaison descendante pour l'au moine un terminal d'utilisateur supplémentaire (ImP-UE, HP-UE) au moyen desdites informations de commande dans l'ordre des puissances de transmission de liaison descendante en commençant par la plus élevée, en reconstruisant un signal radioélectrique des données de liaison descendante pour l'au moins un terminal d'utilisateur supplémentaire (ImP-UE, HP-UE), et en soustrayant le signal radioélectrique des données de liaison descendante pour l'au moins un terminal d'utilisateur supplémentaire (ImP-UE, HP-UE) du signal radioélectrique superposé,
• et décoder ses propres données de liaison descendante en utilisant le signal radioélectriques superposé qui a été réduit par le signal radioélectrique pour l'au moins un terminal d'utilisateur supplémentaire (ImP-UE, HP-UE).

14. Réseau de communication (CN) comprenant au moins une station de base (BS) selon la revendication 12 et au moins un terminal d'utilisateur (LP-UE) selon la revendication 13.
